# EUROPÄISCHE PATENTSCHRIFT

(11) **EP 0 726 635 B1**
(45) Veröffentlichungstag und Bekanntmachung des Hinweises auf die Patenterteilung: **19.07.2000**
(21) Anmeldenummer: 96101677.1
(22) Anmeldetag: 06.02.1996
(51) Int. Cl.: H02K 1/20, H02K 5/20

(54) **Elektrische Maschine**
Electrical machine
Machine électrique

(30) Priorität: 13.02.1995 DE 19504691
(43) Veröffentlichungstag der Anmeldung: 14.08.1996
(73) Patentinhaber: SIEMENS AKTIENGESELLSCHAFT, 80333 München (DE)
(72) Erfinder: Auernhammer, Erich, Dipl.-Ing. Dipl.-Ing. (FH), D-90409 Nürnberg (DE)

(56) Entgegenhaltungen:
- EP-A- 0 503 093
- EP-A- 0 560 993
- WO-A-92/17932
- US-A- 4 745 314
- PATENT ABSTRACTS OF JAPAN, unexamined applications, E Field, Band 9, Nr. 255, 12. Oktober 1985 THE PATENT OFFICE JAPANESE GOVERNMENT Seite 19 E 349; & JP-A-60 102 827 (FANUC)

## Beschreibung

Die Erfindung betrifft eine **luftgekühlte** elektrische Maschine.

Bei sogenannten gehäuselosen **luftgekühlten** elektrischen Maschinen werden an den Stirnseiten des Ständerblechpaketes die Lagerschilde direkt an das Ständerblechpaket oder an an dessen Stirnseiten vorgesehenen Druckplatten angebaut. Bei derartigen gehäuselosen Maschinen sind im Ständerblechpaket Kühlkanäle vorgesehen. Handelt es sich um ein Ständerblechpaket mit quadratischem Querschnitt, dann sind die Kühlkanäle vorzugsweise in den Ecken des Ständerblechpaketes angeordnet. Die die Kühlkanäle durchströmende Kühlluft wird entweder direkt aus dem vom Lagerschild umgrenzten Raum zugeführt bzw. in diesen abgeführt. Wenn zwischen dem Ständerblechpaket und den Lagerschilden noch eine Druckplatte vorhanden ist, dann sind in diesen Druckplatten sich mit den Kühlkanälen deckende Durchgangskanäle vorgesehen.

Da sowohl die Druckplatten als auch die Lagerschilde hohe Kräfte aufnehmen müssen, sind für diese Elemente entsprechend große Wandstärken erforderlich. In der Regel schließen sowohl die Druckplatten als auch die Lagerschilde mit der Außenkontur des Ständerblechpaketes bündig ab. Somit erstrecken sich die entsprechenden Wandteile der Druckplatten und der Lagerschilde relativ weit nach innen. Hierdurch werden die Kühlkanäle des Ständerblechpaketes in ihrer zum Außenumfang des Ständerblechpaketes gerichteten Erstreckung entsprechend begrenzt und damit letztlich auch die Kühlung der Maschine.

Der Erfindung liegt die Aufgabe zugrunde eine **luftgekühlte** elektrische Maschine zu schaffen, deren Kühlung wesentlich verbessert ist.

Gemäß der Erfindung ist dies bei einer luftgekühlten elektrischen Maschine der Fall, bei der an den Stirnseiten des Ständerblechpaketes Druckplatten oder Lagerschilde angebracht und ferner im Ständerblechpaket Kühlkanäle ausgebildet sind, die in entsprechende Durchgangskanäle der Druckplatten oder direkt in den von den Lagerschilden umgrenzten Raum münden, wobei die Kühlkanäle des Ständerblechpaketes an ihren Mündungsöffnungen auf ihrer zum Außenumfang des Ständerblechpaketes hin liegenden Seite teilweise von den Druckplatten bzw. dem Anschlußrand, mit dem die Lagerschilde am Ständerblechpaket befestigt sind, überdeckt sind und die kühlkanäle dabei über eine Verengung in den an die Druckplatte bzw. den Anschlußrand angrenzenden Raum führen.

Die im Ständerblechpaket vorgesehenen Kühlkanäle können bei dieser Maschine zum Außenumfang des Ständerblechpaketes hin wesentlich erweitert werden. Da die vom Ständerblechpaket insbesondere in radialer Richtung auszuhaltenden Kräfte gegenüber den von den Druckplatten bzw. den Lagerschilden aufzunehmenden Kräfte wesentlich kleiner sind, können die Kühlkanäle zum Außenumfang des Ständerblechpaketes hin bis auf einen entsprechend dünnen Materialsteg erweitert werden. Infolge der Überdeckung der Kühlkanäle durch die Druckplatte bzw. den Anschlußrand der Lagerschilde ist für diese Elemente die zur Aufnahme der hohen Kräfte erforderliche Wandstärke möglich.

Anhand eines in der Zeichnung dargestellten Ausführungsbeispieles wird die Erfindung nachfolgend näher beschrieben. Es zeigt:

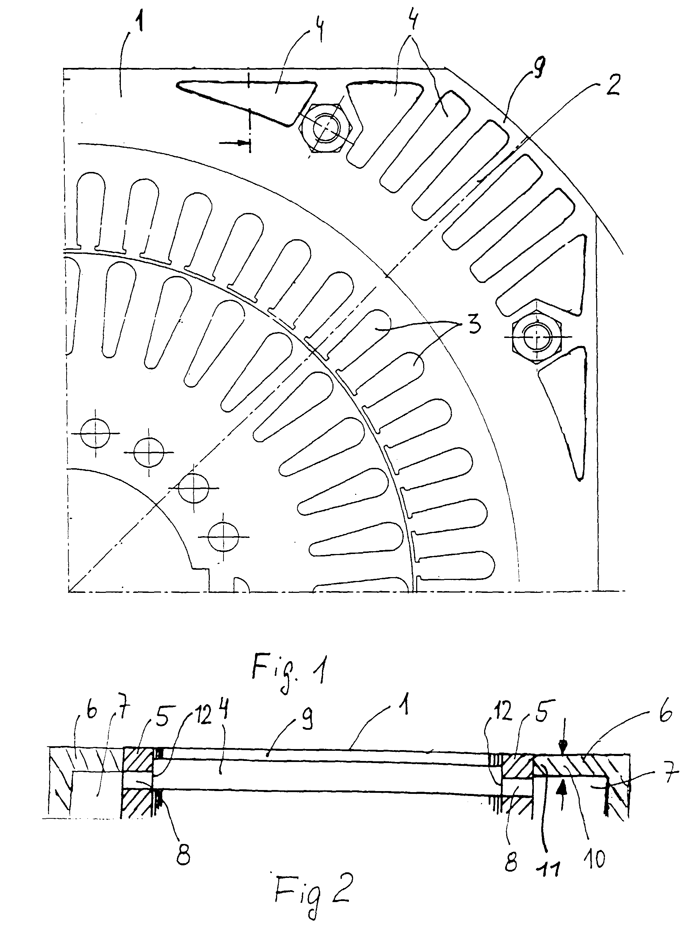

- FIG 1: einen mit Kühlkanälen versehenen Eckbereich eines Ständerblechpaketes im Querschnitt,
- FIG 2: einen Schnitt entlang der Linie II-II in FIG. 1.

Mit 1 ist das Ständerblechpaket einer elektrischen Maschine 1 bezeichnet. Dieses Blechpaket weist einen quadratischen Querschnitt auf, so daß in den Eckbereichen 2 gegenüber den kreisbogenförmig angeordneten Ständernuten 3 Raum für Kühlkanäle 4 zur Verfügung steht. An den Stirnseiten des Ständerblechpaketes 1 sind Druckplatten 5 angefügt, an denen wiederum die Lagerschilde 6 der Maschine befestigt sind. Die Lagerschilde 6 können gegebenenfalls auch direkt am Ständerblechpaket 1 angebracht werden. Die Druckplatten 5 sind durch in der Zeichnung nicht dargestellte Zuganker miteinander verbunden und halten das Ständerblechpaket 1 zusammen.

Die die Kühlkanäle 4 des Ständerblechpaketes 1 durchströmende Kühlluft wird über den von den Lagerschilden 6 umgrenzten Raum 7 zugeführt bzw. in diesen Raum 7 ausgeblasen. Sind Druckplatten 5 vorgesehen, dann weisen diese entsprechende Durchgangskanäle 8 auf, durch die die Kühlluft von dem Raum 7 des einen Lagerschildes 6 zu den Kühlkanälen 4 hinströmen und nach Durchströmen derselben in den Raum 7 des gegenüberliegenden Lagerschildes 6 ausströmen kann.

Der die im Ständerblechpaket 1 vorgesehenen Kühlkanäle 4 zum Außenumfang des Ständerblechpaketes 1 hin begrenzende Materialsteg 9 ist entsprechend der in radialer Richtung vom Ständerblechpaket 1 aufzunehmenden relativ kleinen Kräfte entsprechend dünn dimensioniert, so daß sich die Kühlkanäle 4 entsprechend nah bis an den Außenumfang erstrecken.

Die Wandstärke 10 der Druckplatten 5 bzw. der Lagerschilde 6 ist entsprechend den von diesen Elementen zu beherrschenden Kräfte wesentlich stärker bemessen. Damit überdecken die Druckplatten 5 bzw. der Anschlußrand 11 der Lagerschilde 6 bei direktem Anbau derselben an das Ständerblechpaket 1 die Mündungsöffnungen 12 der Kühlkanäle 4. Die hierdurch entstehende Verengung gegenüber den Kühlkanälen 4 beeinflußt die Kühlung der elektrischen Maschine nicht. Die Kühlung ist vielmehr wegen der gegenüber den Durchgangskanälen 8 erweiterten Kühlkanälen 4 wesentlich verbessert.

## Patentansprüche

1. Luftgekühlte elektrische Maschine, bei der an den Stirnseiten des Ständerblechpaketes (1) Druckplatten (5) oder Lagerschilde (6) angebracht und ferner im Ständerblechpaket (1) Kühlkanäle (4) ausgebildet sind, die in entsprechende Durchgangskanäle (8) der Druckplatten (5) oder direkt in den von den Lagerschilden (6) umgrenzten Raum (7) münden, wobei die Kühlkanäle (4) des Ständerblechpaketes (1) an ihren Mündungsöffnungen (12) auf ihrer zum Außenumfang des Ständerblechpaketes (1) hin liegenden Seite teilweise von den Druckplatten (5) bzw. dem Anschlußrand (11), mit dem die Lagerschilde (6) am Ständerblechpaket (1) befestigt sind, überdeckt sind und die Kühlkanäle (4) dabei über eine Verengung in den an die Druckplatte bzw. den Anschlußrand (11) angrenzenden Raum (7) führen.

## Claims

1. Air-cooled electrical machine, in which thrust plates (5) or end shields (6) are provided on the end faces of the laminated stator core (1) and, furthermore, formed in the laminated stator core (1) there are cooling ducts (4) which run into corresponding through-ducts (8) of the thrust plates (5) or directly into the space (7) bounded by the end shields (6), wherein the cooling ducts (4) of the laminated stator core (1), at the openings (12) of their mouths on their side lying towards the outer periphery of the laminated stator core (1), are covered in part by the thrust plates (5) or the connecting edge (11), with which the end shields (6) are secured to the laminated stator core (1), and the cooling ducts (4) thereby lead by way of a constriction into the space (7) that is adjacent to the thrust plate or the connecting edge (11) respectively.

## Revendications

1. Machine électrique refroidie par air, dans laquelle des plaques (5) de pression ou des flasques (6) sont montés sur les côtés frontaux de l'empilage (1) de tôles de stator, et des canaux (4) de refroidissement sont en outre formés dans l'empilage (1) de tôles de stator, qui débouchent dans des canaux (8) de passage correspondants des plaques (5) de pression ou directement dans l'espace (7) délimité par les flasques (6), les canaux (4) de refroidissement de l'empilage (1) de tôles de stator étant, à leurs ouvertures (12) d'embouchure, sur leur côté orienté vers la périphérie extérieure de l'empilage (1) de tôles de stator, partiellement recouverts par les plaques (5) de pression ou encore par le bord (11) de raccordement par lequel les flasques (6) sont fixés sur l'empilage (1) de tôles de stator, et les canaux (4) de refroidissement menant alors par l'intermédiaire d'un rétrécissement dans l'espace limitrophe de la plaque de pression ou du bord (11) de raccordement.
